# EUROPEAN PATENT SPECIFICATION

(11) **EP 1 512 246 B1**
(45) Date of publication and mention of the grant of the patent: **20.12.2006**
(21) Application number: 02732941.6
(22) Date of filing: 10.06.2002
(51) Int. Cl.: H04L 12/18, H04L 29/06, G06Q 90/00

(54) **CLIENT-SERVER COMMUNICATION SYSTEM**
CLIENT-SERVER KOMMUNIKATIONSSYSTEM
SYSTEME DE COMMUNICATION CLIENT-SERVEUR

(43) Date of publication of application: 09.03.2005
(73) Proprietor: Caplin Systems Limited, London EC2A 1BR (GB)
(72) Inventor: Tyler, Martin James, London EC1V 3RF (GB)
(74) Representative: Walaski, Jan Filip
(86) International application number: PCT/GB2002/002715
(87) International publication number: WO 2003/105403

(56) References cited:
- WO-A-00/65510
- US-A1- 2001 051 907
- US-A1- 2002 042 764
- QUESTIONEXCHANGE (USENET QUESTIONEXCHANGE.COM): "Re: Sharing data between applets " INTERNET NEWSGROUP, [Online] 13 April 2000 (2000-04-13), XP002210280 comp.lang.java.programmer Retrieved from the Internet: <URL:http://groups.google.com/> [retrieved on 2002-08-19]
- NETSCAPE COMMUNICATIONS CORPORATION : "JavaScript Guide - Chapeter 5 : LiveConnect" NETSCAPE DEVELOPER WEB SITE, [Online] 26 November 1997 (1997-11-26), XP002210281 Retrieved from the Internet: <URL:http://developer.netscape.com/docs/ma nuals/communicator/jsguide4/livecon.htm> [retrieved on 2002-08-19]

## Description

### Field of the Invention

This invention relates to a method of connecting a browser to a plurality of information servers, particularly but not exclusively to using a JavaScript™ layer as an interface between control and communications applets running within the browser.

### Background

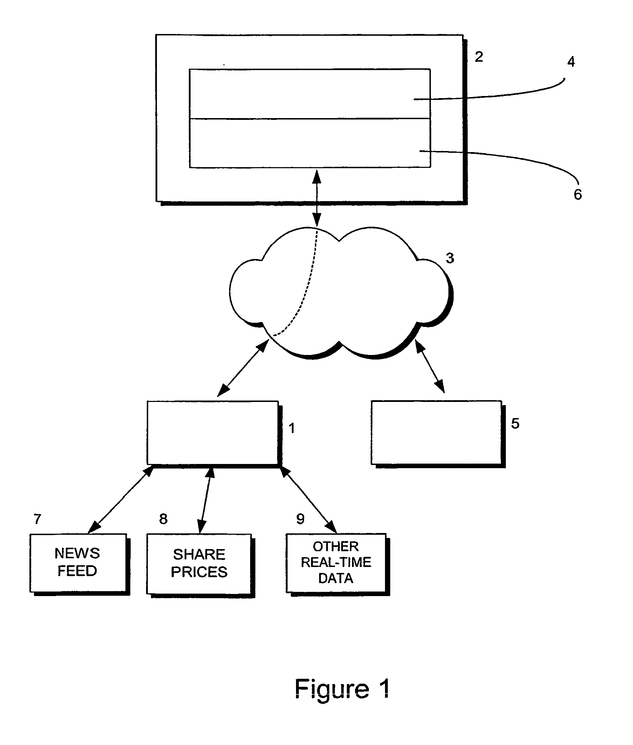

In the general model of a client-server system operating over a private or public network, such as the Internet, a client computer uses a web client, usually referred to as a browser, to connect to one of many available servers. In the case of, for example, real-time financial information, a plurality of service providers provide information over the Internet. For example, referring to Figure 1, the Real Time Text Protocol^{™} (RTTP) developed by Caplin Systems Limited is widely used within the financial services community for streaming real-time data from a remote RTTP enabled server 1 to a client's browser 2, such as Microsoft Internet Explorer^{™} or Netscape Navigator^{™}, via the Internet 3. The browser 2 downloads a web page which comprises dynamic HTML (DHTML) source code 4 from a web server 5. This enables the browser 2 to connect to the RTTP server 1 which provides an applet 6, written in the Java^{™} programming language, to enable communication between the server 1 and the browser 2 using the RTTP protocol. The server 1 receives feeds from multiple data sources, such as servers 7 - 9 providing real time data, e.g. news, share prices or other data, conforms them to the RTTP protocol and opens a single RTTP session to the applet 6 running in the browser 2. The applet 6 permits the browser 2 to receive and display real-time streaming data from the server 1.

Document "JavaScript Guide Chapter 5: Live Connect", URL: http://developer.netscape.com/docs/ma discloses a system which enables communication between JavaScript and Java applets and between JavaScript and plug-ins loaded on a page in a browser.

One of the main tenets of the Java^{™} language is to enable browsers to run applets safely, that is, without damaging the client system on which they run. In general terms, since they originate from an external source, all downloaded applets are considered to be untrusted. To prevent an applet from performing operations which could damage the client system on which it runs, an untrusted applet is prevented by the Java Applet Security Manager^{™}, which is part of the Java Run-time Environment^{™} running on the client's system, from performing certain tasks on that system. This is known as the "sandbox" model. The functionality of the applet is restricted, for example, the applet cannot write to the client's local file system.

Similarly, an untrusted applet is only permitted to communicate with the server from which it originated. Applets downloaded from different servers are considered to be within separate sandboxes and are therefore not permitted to communicate with one another.

The security restrictions imposed by the sandbox model can be overcome by converting the applet to a trusted applet, where the applet is digitally signed by a source trusted by the user and must be explicitly accepted by the user. However, if signed applets were to be used in the context of a user using a browser to access information from multiple information servers, the user would need to download and accept a considerable number of applets to maintain system security. The resulting system would be both inconvenient and impractical as well as having the potential to compromise the security of the user's system.

### Summary of the Invention

According to the invention, there is provided a method of implementing a connection between a browser and one or more remote data servers comprising providing a control module for processing data retrieved from the remote servers, providing one or more communications modules each configured to communicate with one of the remote servers and prevented from direct communication with the control module and providing an interface module operative to permit communication between the control module and the communications modules.

The control module and communications modules can be Java^{™} applets while the interface module is a JavaScript™ layer.

The prohibition on applets loaded from different servers communicating with one another is overcome by permitting the applets to communicate via the JavaScript™ layer. Since each of the communications applets handles communications with its respective server, the control applet need not be concerned with that task, so that the overall system is more resource efficient than the conventional model, in which a single control/communications applet needs to handle control and communications with multiple servers by opening multiple sessions.

According to the invention there is further provided a browser configured to retrieve information from a plurality of remote servers including a control module originating from a first server and one or more communications modules originating from one or more of the remote servers, wherein each of the communications modules is configured to communicate with the remote server from which it was downloaded and is prevented from direct communication with the control module; and an interface module for facilitating communication between the control and communications modules.

According to the invention there is still further provided a method of communicating information between a browser and one or more servers, wherein communications between the browser and each of the one or more servers occur via respective communications applets running in the browser, the method comprising communicating the information between a control applet running in the browser and each of the communications applets, the control applet and the communications applets being configured to communicate via an interface layer.

### Brief Description of the Drawings

Embodiments of the present invention will now be described by way of example, with reference to the accompanying drawings, as follows:
Figure 1 shows a conventional communication system for providing real-time information to a browser from a plurality of information sources via an RTTP server;
Figure 2 shows a system according to the present invention in which a browser can connect to multiple data servers;
Figure 3 is a flowchart of the procedure for configuring the browser for communication with the data servers and handling incoming data; and
Figure 4 is a schematic example of the display presented to the user.

### Detailed Description

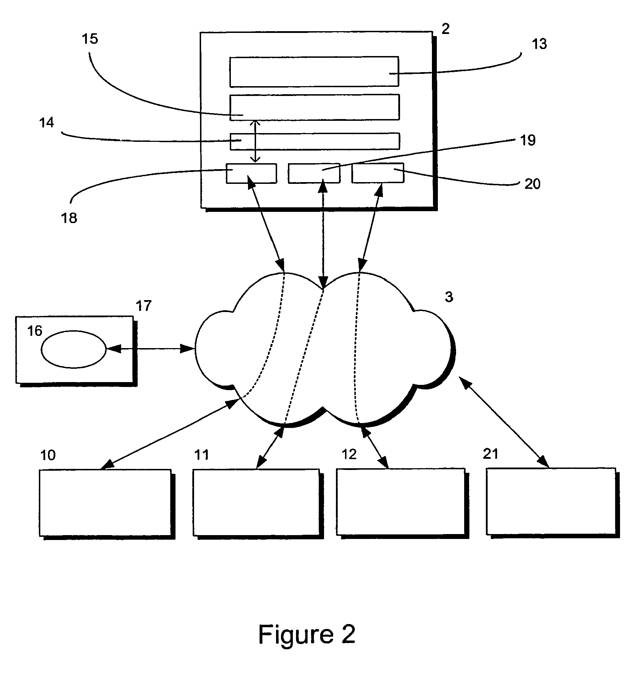

Referring to Figure 2, a communication system according to the present invention comprises a browser 2 communicating with multiple data servers 10, 11, 12, each of which operates in accordance with the Real Time Text Protocol (RTTP)™, or any protocol that permits streaming of real-time data to a browser over a communications network.

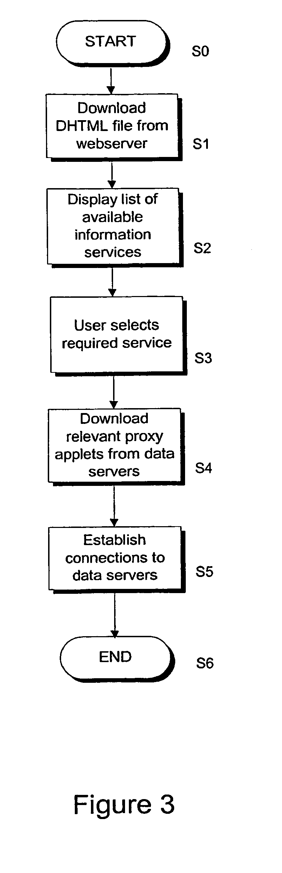

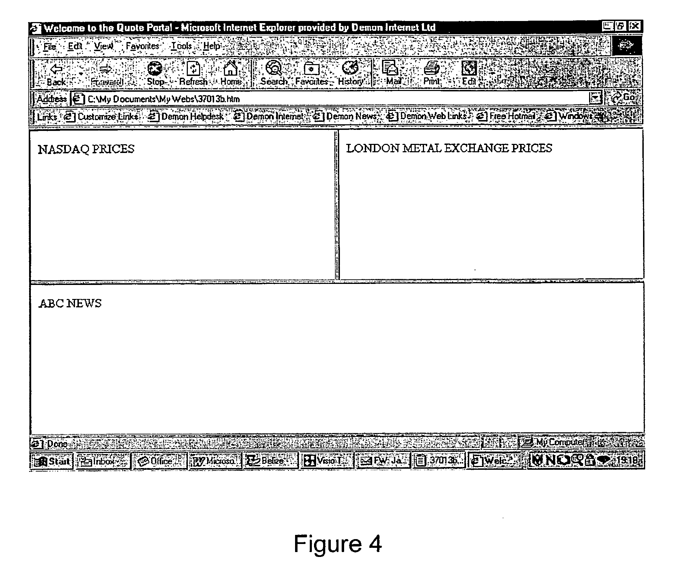

The configuration of the browser will now be described, with reference to Figure 3 and beginning at step s0. The browser 2 downloads a DHTML page 13, which includes a program layer 14 written in JavaScript™, defined for example by a <SCRIPT> tag in the DHTML page 13, together with a control applet 15, from a web server 16 running on a remote computer 17 (step s1). The control applet 15 provides functionality for processing incoming data. The incoming data may be manipulated, e.g., combining data from one or more sources, performing calculations and statistical analyses. The data may be then stored and/ or displayed on the user's screen, an example of which is shown in Figure 4, with data from different sources being displayed in different frames. The DHTML layer 13 permits the browser 2 to connect to a plurality of RTTP servers 10 - 12 in accordance with the user's requirements. For example, a list of available information services, provided by the data servers 10 - 12, is displayed in the browser 2, (step s2), so that the user can select one or more information services for display (step s3). Each RTTP server 10 - 12 provides a Java^{™} applet 18 - 20, also referred to as a proxy or communications applet, which is capable of handling data communications between the browser 2 and the respective RTTP server 10 - 12. The communications applets 18 - 20 do not need to contain further functionality, as this can be provided in the control applet 15. Therefore, each communications applet 18 - 20 requires considerably less system resources, including memory, than the applet 6 of the conventional system, as it contains only the functionality necessary to communicate with its respective server 10-12. The selected communications applets 18-20 are downloaded into the browser (step s4) and communication sessions are established between each of the communications applets 18 - 20 and their respective data servers 10-12 (step s5), completing the configuration of the browser (step s6).

To enable data requests to be communicated between the control applet 15 and an RTTP server 10 and incoming data to be passed to the control applet 15 for processing, a connection must be established between the control applet 15 and a respective one of the communications applets 18. The Java^{™} security model provides a barrier to this connection, since the control and communications applets 15, 18 originated from different servers 16, 10.

To overcome this barrier, a connection between the applets is established via the JavaScript™ layer 14. The layer 14 acts as an interface between the control applet 15 and the communications applets 18 - 20. The browser permits communication between Java^{™} and JavaScript^{™} using the Java^{™} wrapper class netscape.javascript.JSObject.

For example, where data is to be passed from the control applet 15 to a communications applet 18, the control applet 15 invokes the 'getWindow()' method of JSObject, which returns a JavaScript™ object representing the window that contains the target applet 18. The control applet 15 then calls the JSObject 'eval' method on this window object, which permits evaluation of an arbitrary JavaScript™ expression. In this case, the JavaScript™ expression in the JavaScript™ layer 14 is a function which includes as parameters the name of the target applet 18 and the data to be communicated to the target applet 18.

It is well-known that conventional browsers hold HTML document definitions in the form of a standardised interface known as the Document Object Model, so that all the elements on the page can be accessed via that interface. The JavaScript™ function uses the applet name to look up the target applet 18 within the Document Object Model maintained by the browser 2 and then calls a predetermined method within the applet 18, passing to it the data to be communicated. This procedure is not necessary where the target applet was originally created by the JavaScript™ layer 14, as the JavaScript™ layer 14 can simply maintain a reference to it, instead of using the Document Object Model to look it up.

Effectively, therefore, the JavaScript™ layer 14 permits the control applet 15 to invoke a method within each of the communications applets 18 - 20. The reverse process similarly permits the communications applets 18 - 20 to communicate data to the control applet 15 via the JavaScript™ layer 14. As each communications applet 18 - 20 contains only the code necessary to communicate with its respective RTTP server 10 - 12, it is possible to load further communications applets for communicating with further RTTP servers 21 as required, without requiring any reconfiguration of the existing communications applets 18 - 20.

Although the described embodiment comprises data servers configured for RTTP communications, it will be understood that the invention is not limited to systems using this particular protocol, but can be used with any protocol which provides for client-server data communications. While the information servers have been shown as separate computers, it should be understood that the respective servers may be provided in the form of separate processes running on the same physical machine. Furthermore, while the described embodiment uses Java^{™} applets, other types of software module which have similar limitations, such as ActiveX™ or VBA™ objects, may be used without departing from the scope of the invention as defined by the claims.

## Claims

1. A method of communicating data between a browser and one or more remote data servers using downloaded Java^{™} applets, wherein a Java^{™} security model prevents communication between the applets, comprising:
downloading a control applet from a control applet providing server, the control applet being configured to process data received from the remote servers;
downloading one or more communications applets from each of the one or more remote servers, each communications applet being configured to communicate with the server from which it originated, and prevented from direct communication with the control applet in accordance with the Java^{™} security model;
running the control applet and the communications applets in the browser; and
communicating data between the one or more remote data server and the browser via an interface layer operative to permit communication between the control applet and each of the communications applets.

2. A method according to claim 1, comprising downloading the control applet from one of the remote data servers.

3. A method according to claim 1 or 2, wherein the control applet and communications applets are Java^{™} applets and the interface layer is a JavaScript™ layer.

4. A method according any one of the preceding claims, further comprising displaying the data in the browser.

5. A method according to any one of the preceding claims, wherein the data comprises reai-time data streamed from the one or more servers to the browser.

6. A browser configured to retrieve data from a plurality of remote data servers using downloaded Java^{™} applets, wherein a Java^{™} security model prevents communication between the applets, including:
a control applet originating from a control applet providing server and configured to process data received from the remote servers;
one or more communications applets originating from one or more of the remote servers, wherein each of the communications applets is configured to communicate with the remote server from which it was downloaded and is prevented from direct communication with the control applet in accordance with the Java^{™} security model; and
an interface layer for facilitating communication between the control and communications applets.

7. A browser according to claim 6, wherein the control and communications applets are Java^{™} applets and the interface layer is a layer of JavaScript™ code.

## Patentansprüche

1. Ein Verfahren zum Kommunizieren von Daten zwischen einem Browser und einem oder mehreren entfernten Datenservern unter Verwendung heruntergeladener Java™-Applets, wobei ein Java™-Sicherheitsmodell die Kommunikation zwischen den Applets verhindert, umfassend:
Herunterladen eines Steuerapplets von einem Steuerappletbereitstellungsserver, wobei das Steuerapplet zum Verarbeiten von von den entfernten Servern empfangenen Daten konfiguriert ist;
Herunterladen von einem oder mehreren Kommunikationsapplets von jeweils dem einen oder den mehreren entfernten Servern, wobei jedes Kommunikationsapplet zum Kommunizieren mit dem Server, von dem es stammt, konfiguriert ist, und wobei eine direkte Kommunikation mit dem Steuerapplet gemäß dem Java™-Sicherheitsmodell verhindert wird;
Ausführen des Steuerapplets und der Kommunikationsapplets in dem Browser; und
Kommunizieren von Daten zwischen dem einen oder den mehreren entfernten Datenservern und dem Browser über eine Schnittstellenschicht, die tätig ist, um eine Kommunikation zwischen dem Steuerapplet und jedem der Kommunikationsapplets zu erlauben.

2. Ein Verfahren gemäß Anspruch 1, umfassend das Herunterladen des Steuerapplets von einem der entfernten Datenserver.

3. Ein Verfahren gemäß Anspruch 1 oder 2, wobei das Steuerapplet und die Kommunikationsapplets Java™-Applets sind und die Schnittstellenschicht eine JavaScript™-Schicht ist.

4. Ein Verfahren gemäß einem der vorhergehenden Ansprüche, weiterhin umfassend Darstellen der Daten in dem Browser.

5. Ein Verfahren gemäß einem der vorhergehenden Ansprüche, wobei die Daten einen Echtzeitdatenstrom von dem einen oder den mehreren Servern zu dem Browser umfassen.

6. Ein Browser, der zum Wiedergewinnen von Daten von einer Vielzahl von entfernten Datenservern unter Verwendung von heruntergeladenen Java™-Applets konfiguriert ist, wobei ein Java™-Sicherheitsmodell die Kommunikation zwischen den Applets verhindert, umfassend:
ein von einem Steuerappletbereitstellungsserver stammendes Steuerapplet, das zum Verarbeiten von von den entfernten Servern empfangenen Daten konfiguriert ist;
ein oder mehrere von einem oder mehreren der entfernten Server stammenden Kommunikationsapplets, wobei jedes der Kommunifcationsapplets zum Kommunizieren mit dem entfernten Server, von dem es heruntergeladen wurde, konfiguriert ist und wobei es an einer direkten Kommunikation mit dem Steuerapplet gemäß dem Java™-Sicherheitsmodell gehindert wird; und
eine Schnittstellenschicht zum Ermöglichen einer Kommunikation zwischen dem Steuer- und den Kommunikationsapplets.

7. Ein Browser gemäß Anspruch 6, wobei das Steuer- und die Kommunikationsapplets Java™-Applets sind und die Schnittstellenschicht eine Schicht von JavaScript™-Code ist.

## Revendications

1. Procédé de communication de données entre un navigateur et un ou plusieurs serveurs de données distants utilisant des applets Java^{™} téléchargés, dans lequel un modèle de sécurité Java^{™} empêche la communication entre les applets, le procédé comprenant les étapes consistant à :
télécharger un applet de commande à partir d'un serveur de fourniture d'applets de commande, l'applet de commande étant configuré pour traiter des données reçues en provenance des serveurs distants ;
télécharger un ou plusieurs applets de communication à partir de chacun du un ou des plusieurs serveurs distants, chaque applet de communication étant configuré pour communiquer avec le serveur à partir duquel il a été téléchargé, et étant empêché de communiquer directement avec l'applet de commande conformément au modèle de sécurité Java^{™};
exécuter l'applet de commande et les applets de communication dans le navigateur ; et
communiquer des données entre le un ou les plusieurs serveurs distants et le navigateur par le biais d'une couche d'interface qui a pour fonction de permettre la communication entre l'applet de commande et chacun des applets de communication.

2. Procédé selon la revendication 1, comprenant l'étape consistant à télécharger l'applet de commande à partir de l'un des serveurs de données distants.

3. Procédé selon la revendication 1 ou 2, dans lequel l'applet de commande et les applets de communication sont des applets Java^{™} et la couche d'interface est une couche JavaScript™.

4. Procédé selon l'une quelconque des revendications précédentes, comprenant en outre l'étape consistant à afficher les données dans le navigateur.

5. Procédé selon l'une quelconque des revendications précédentes, dans lequel les données comprennent des données en temps réel reçues en un flot continu depuis le un ou les plusieurs serveurs vers le navigateur.

6. Navigateur configuré pour récupérer des données à partir d'une pluralité de serveurs de données distants en utilisant des applets Java^{™} téléchargés, dans lequel un modèle de sécurité Java^{™} empêche la communication entre les applets, le navigateur comprenant :
un applet de commande reçu en provenance d'un serveur de fourniture d'applets de commande et configuré pour traiter des données reçues en provenance des serveurs distants ;
un ou plusieurs applets de communication provenant d'un ou de plusieurs serveurs distants, dans lequel chacun des applets de communication est configuré pour communiquer avec le serveur distant à partir duquel il a été téléchargé, et est empêché de communiquer directement avec l'applet de commande conformément au modèle de sécurité Java^{™}; et
une couche d'interface pour faciliter la communication entre l'applet de commande et les applets de communication.

7. Navigateur selon la revendication 6, dans lequel l'applet de commande et les applets de communication sont des applets Java^{™} et la couche d'interface est une couche de code JavaScript™.
